# EUROPEAN PATENT SPECIFICATION

(11) **EP 2 991 490 B1**
(45) Date of publication and mention of the grant of the patent: **14.10.2020**
(21) Application number: 14716569.0
(22) Date of filing: 09.04.2014
(51) Int. Cl.: A01N 47/24, A01N 3/04, A01N 25/10, A01N 43/40, A01P 1/00, A01P 3/00

(54) **APPLYING A PESTICIDE-COMPRISING DISPERSION OF AN ALIPHATIC POLYURETHANE TO PLANTS**
AUFTRAGEN EINER PESTIZIDHALTIGEN DISPERSION EINES ALIPHATISCHEN POLYURETHANS AUF PFLANZEN
APPLICATION D'UNE DISPERSION COMPRENANT UN PESTICIDE D'UN POLYURÉTHANE ALIPHATIQUE SUR DES PLANTES

(30) Priority: 30.04.2013 EP 13165986
(43) Date of publication of application: 09.03.2016
(73) Proprietor: BASF SE, 67056 Ludwigshafen am Rhein (DE)
(72) Inventor: SCHNEIDER, Karl-Heinrich, 67271 Kleinkarlbach (DE); PARENTI, Antonio, 69115 Heidelberg (DE); MERK, Michael, I-20020 Arese (IT); FRÖHLING, Peter, 67251 Freinsheim (DE); NOLTE, Marc, 68165 Mannheim (DE); BLANZ, Birgit, 67435 Neustadt (DE); HENKES, Steffen, 67459 Böhl-Iggelheim (DE); HÄBERLE, Karl, 67346 Speyer (DE); GOLD, Randall Evan, 67283 Obrigheim (DE); KUEHN, Annett, 67105 Schifferstadt (DE)
(74) Representative: BASF IP Association
(86) International application number: PCT/EP2014/057207
(87) International publication number: WO 2014/177352

(56) References cited:
- EP-A1- 2 332 587
- WO-A1-2008/052913
- WO-A1-2009/040339
- WO-A2-2010/142618
- DE-A1- 19 532 538
- DE-A1- 19 730 410
- US-A1- 2002 086 044

## Description

The present invention relates to a method of applying an aqueous, pesticide-comprising dispersion of a polyurethane which is composed of diisocyanates (a) and diols (b), to plants or plant parts. Furthermore, the invention relates to an aqueous, pesticide-comprising dispersion of a polyurethane which is composed of diisocyanates (a) and diols (b). It furthermore relates to a use of the dispersion for controlling phytopathogenic fungi and/or undesired plant growth and/or undesired attack by insect or mites and/or for regulating the growth of plants, by allowing the dispersion to act on the respective pests, their environment and/or the plants to be protected from the respective pest, on plant parts, on the soil and/or on undesired plants and/or on the useful plants and/or their environment.

Plants are exposed not only to the weather, but also to attack by pests. These include bacteria, yeasts, viruses, but mainly insects and harmful fungi. They exploit the surface of plants, plant parts or wounds in order to penetrate. A sufficient protection of surfaces, pores or wounds of plants is therefore required.

It is known that a series of plant pathogens such as bacteria, yeasts, viruses, but mainly harmful fungi, penetrate wounds in the woody parts, as are generated for example by the maintenance pruning of fruit trees or by game damage and also by grafting methods, from where they infect the entire plant. Such an infection can lead to quality losses of the wood, to disease of the plant, or to reduced yields, indeed to the loss of the fruit-bearing capacity of the woody parts, or the dying of the plant. This damage is frequently irreversible. To avoid such infections via the wound, wounds in woody parts are, as a rule, sealed against air and water with the aid of, for example, waxy pruning compound. Sealing wounds in woody parts, for example pruning wounds in grapevines, using tar or a substance with disinfecting activity has been known since the thirties of the 20th century. A variety of resin-like substances have been employed for the surface treatment and for sealing wounds in plants. At the beginning, tar or bitumen was preferred. However, these materials become brittle over time and permit a later attack by the pathogens.

In recent years, the wood disease esca (which is derived from Greek yska, meaning "rotten wood") in grapevines has increasingly caused problems in viticulture. Esca comprises a complex of fungal pathogens. The pathogens which, according to the literature, have been associated with esca symptoms are Fomitiporia punctata (syn. Phellinus punctatus), Fomitiporia mediterrana, Phaeoacremonium spp., Phaeoacremonium aleophilum and Phaemoniella chlamydosporum. One particular fungus which has been isolated from the wood of esca-infected grapevines is Fomitiporia mediterrana (white rot). The infection of grapevines with the pathogens takes place via wounds, in particular via cuts, which are susceptible to infections over several months. The air-borne spores or conidia land on the pruning wounds and grow into the grapevines. The infestation of the woody part of the plant takes place for several years before the first symptoms become apparent. The wood decays, and the vascular bundles are destroyed. No effective protective measures against esca are known to date, with the exception of minimizing the infection potential, by removing infected wood from the plantation. A mechanical protection of the exposed areas after the pruning of the grapes can be achieved by applying, to the pruning cuts, wound sealants, which prevent the pathogens from penetrating.

WO 09/040339 discloses a liquid composition comprising a water-insoluble sealing agent in dissolved or dispersed form, a plant protectant, a volatile diluent and a nonionic surface-active substance in an amount of from 10 to 100% by weight, based on the sealing agent. The sealing agent may be for example a polyurethane. A disadvantage is the high content of surface-active substance in the composition.

WO 2010/142618 discloses an aqueous, pesticide-comprising dispersion of a polyurethane which is composed of aliphatic and aromatic polyisocyanates.

It was therefore an object of the present invention to find a method for applying a protective coating to the surfaces of plants or plant parts. The method should permit a simple application, for example by spraying. A further object was that the method should result in a long-lasting protective coating. In particular, it was an object to find a method for the protective treatment of fungal diseases on woody plants, specifically for the treatment of esca in grapevines.

The object was achieved by a method of applying an aqueous, pesticide-comprising dispersion of a polyurethane which is composed of diisocyanates (a) and diols (b), to plants or plant parts, wherein the diisocyanate comprises not more than 1% by weight of aromatic diisocyanate and at least 99% by weight of aliphatic diisocyanate, in each case based on the diisocyanate (a).

A first subject-matter of the invention, therefore, relates to such a method of applying an aqueous, pesticide-comprising dispersion of a polyurethane to plants or plant parts. A further subject matter is an aqueous, pesticide-comprising dispersion of a polyurethane which is composed of diisocyanates (a) and diols (b), wherein the diisocyanate (a) comprises not more than 1% by weight of aromatic diisocyanate and at least 99% by weight of aliphatic diisocyanate, in each case based on the diisocyanate (a).

The polyurethane is composed of diisocyanates (a) and diols (b), wherein the diisocyanate (a) comprises not more than 1% by weight of aromatic diisocyanate and at least 99% by weight of aliphatic diisocyanate, in each case based on the diisocyanate (a).

The polyurethane is composed of
a) diisocyanates, wherein the diisocyanate (a) comprises not more than 1% by weight of aromatic diisocyanate and at least 99% by weight of aliphatic diisocyanate, in each case based on the diisocyanate (a),
b) diols (b1) and (b2), of which
   b1) 10 to 100 mol%, based on the total amount of the diols (b), have a molecular weight of from 500 to 5000, and
   b2) up to 90 mol%, based on the total amount of the diols (b), have a molecular weight of from 60 to 500 g/mol; and wherein the ratio of the diols (b1) to the diols (b2) in mol%, based on the total amount of the diols (b), is from 0.1:1 to 5:1.
c) optionally, monomers which are different from monomers (a) and (b) and which have at least one isocyanate group or at least one group which is reactive towards isocyanate groups, which monomers additionally have at least one hydrophilic group or a potentially hydrophilic group, which brings about the dispersibility of the polyurethanes in water,
d) optionally, further polyvalent compounds which differ from the monomers (a) to (c) which have reactive groups, which groups are alcoholic hydroxyl groups, primary or secondary amino groups or isocyanate groups, and
e) optionally, monovalent compounds which differ from the monomers (a) to (d) and which have a reactive group, which group is an alcoholic hydroxyl group, a primary or secondary amino group or an isocyanate group.

In most cases, the polyurethane is obtainable by reacting the monomers a), b), and optionally c), d) and/or e). The polyurethane is preferably obtainable by reacting the monomers a), b), c) and optionally d) and/or e).

Monomers (a) which must be mentioned in particular are diisocyanates X(NCO)₂, where X is an aliphatic hydrocarbon radical having 4 to 12 carbon atoms or a cycloaliphatic hydrocarbon radical having 6 to 15 carbon atoms. Examples of such diisocyanates are tetramethylene diisocyanate, hexamethylene diisocyanate (HDI), dodecamethylene diisocyanate, 1,4-diisocyanatocyclohexane, 1-isocyanato-3,5,5-trimethyl-5-isocyanatomethylcyclohexane (IPDI), 2,2-bis(4-isocyanatocyclohexyl)propane, trimethylhexane diisocyanate, the isomers of bis(4-isocyanatocyclohexyl)methane (HMDI), such as the trans/trans, the cis/cis and the cis/trans isomer, and mixtures composed of these compounds. IPDI and/or HMDI are especially preferred.

Such diisocyanates are commercially available.

To compose the polyurethanes, it is possible to employ, by way of compounds, not only the abovementioned, but also isocyanates which, in addition to the free isocyanate groups, include further, capped isocyanate groups, for example uretdione groups.

The diols (b1) are, in particular, polyester polyols, which are known from, for example, Ullmanns Encyklopädie der technischen Chemie (Ullmann's Encyclopedia of Industrial Chemistry), 4th edition, volume 19, pages 62 to 65. The polyesterol preferably has a number-average molecular weight of below 10 000 g/mol, preferably from 500 to 6000 g/mol and in particular from 800 to 4000 g/mol.

It is preferred to employ polyester polyols which are obtained by reacting dihydric alcohols with divalent polycarboxylic acids. In the place of the free polycarboxylic acids, it is also possible to produce the polyester polyols using the corresponding polycarboxylic anhydrides or the corresponding polycarboxylic acid esters of lower alcohols or their mixtures. The polycarboxylic acids may be aliphatic, cycloaliphatic, araliphatic, aromatic or heterocyclic and may be optionally substituted, for example by halogen atoms, and/or unsaturated. Examples thereof which may be mentioned are: suberic acid, azelaic acid, phthalic acid, isophthalic acid, phthalic anhydride, tetrahydrophthalic anhydride, hexahydrophthalic anhydride, tetrachlorophthalic anhydride, endomethylenetetrahydrophthalic anhydride, glutaric anhydride, maleic acid, maleic anhydride, fumaric acid, dimeric fatty acids. Preferred are dicarboxylic acids of the general formula HOOC-(CH₂)_{y}-COOH, where y is a number of from 1 to 20, preferably an even number of from 2 to 20, for example succinic acid, adipic acid, sebacic acid and dodecanedicarboxylic acid.

Suitable polyhydric alcohols are, for example, ethylene glycol, propane-1,2-diol, propane-1,3-diol, butane-1,3-diol, butene-1,4-diol, butyne-1,4-diol, pentane-1,5-diol, neopentyl glycol, bis(hydroxymethyl)cyclohexanes such as 1,4-bis(hydroxymethyl)cyclohexane, 2-methylpropane-1,3-diol, methylpentanediols, furthermore diethylene glycol, triethylene glycol, tetraethylene glycol, polyethylene glycol, dipropylene glycol, polypropylene glycol, dibutylene glycol and polybutylene glycols. Preferred are alcohols of the general formula HO-(CH₂)ₓ-OH, where x is a number of from 1 to 20, preferably an even number of from 2 to 20. Examples are ethylene glycol, butane-1,4-diol, hexane-1,6-diol, octane-1,8-diol and dodecane-1,12-diol. Also preferred is neopentyl glycol.

In addition, polycarbonate diols are also useful, as can be obtained for example by reacting phosgene with an excess of the low-molecular-weight alcohols mentioned as structural components for the polyester polyols.

Other polyester diols which are suitable are based on lactones, taking the form of lactone homopolymers or mixed polymers, preferably of adducts of lactones and suitable difunctional starter molecules, having terminal hydroxyl groups. Suitable lactones are preferably those which are derived from compounds of the general formula HO-(CH₂)_{z}-COOH where z is a number from 1 to 20 and one H atom of a methylene unit may also be substituted by a C₁- to C₄-alkyl radical. Examples are ε-caproiactone, β-propioiactone, γ-butyrolactone and/or methyl- ε-caprolactone and their mixtures. Examples of suitable starting components are the low-molecular-weight dihydric alcohols which have been mentioned hereinabove as structural component for the polyester polyols. The corresponding polymers of ε-caprolactone are particularly preferred. Lower polyester diols or polyether diols may also be employed as starters for the preparation of the lactone polymers. Instead of the lactone polymers, it is also possible to use the corresponding chemically equivalent polycondensates of the hydroxycarboxylic acids which correspond to the lactones.

Besides, suitable monomers (b1) are polyether diols. They are obtainable in particular by polymerizing ethylene oxide, propylene oxide, butylene oxide, tetrahydrofuran, styrene oxide or epichlorohydrin with themselves, for example in the presence of BF₃ or by subjecting these compounds, optionally as a mixture or one after the other, to an addition reaction with starting components with reactive hydrogen atoms, such as alcohols or amines, for example water, ethylene glycol, propane-1,2-diol, propane-1,3-diol, 1,2-bis(4-hydroxydiphenyl)propane or aniline. Especially preferred is polytetrahydrofuran, having a molecular weight of from 240 to 5000, and especially from 500 to 4500. In addition, it is also possible to employ, as monomers (b1), mixtures of polyester diols and polyether diols.

Likewise suitable as monomers (c1) are polyhydroxyolefins, preferably those which have 2 terminal hydroxyl groups, for example a,-w-dihydroxypolybutadiene, a,-w-dihydroxypolymethacrylic ester or a,-w-dihydroxypolyacrylic ester. Such compounds are known, for example, from EP-A 0622378. Other polyols which are suitable are polyacetals, polysiloxanes and alkyd resins.

The polyols may also be employed as mixtures in the ratio 0.1:1 to 1:9.

The hardness and the modulus of elasticity of the polyurethanes can be increased when, besides the diols (b1), low-molecular-weight diols (b2) with a molecular weight of approximately 60 to 500, preferably of from 62 to 200 g/ml, are additionally employed as diols (b).

Monomers (b2) which are employed are, mainly, the structural components of the short-chain alkanediols which have been mentioned for the preparation of polyester polyols, with diols having 2 to 12 C atoms, unbranched diols having 2 to 12 C atoms and an even number of C atoms, and pentane-1,5-diol and neopentyl-glycol being preferred.

Preferably, the amount of the diols (b1), based on the total amount of the diols (b), is from 10 to 100 mol% and the amount of the monomers (b2), based on the total amount of the diols (b), is from up to 90 mol%. The ratio of the diols (b1) to the monomers (b2) is especially preferably from 0.1:1 to 5:1, especially preferably 0.2:1 to 2:1.

To achieve the dispersibility of the polyurethanes in water, the polyurethanes are composed of, besides the components (a), (b) and optionally (d), of monomers (c) which are different from the components (a), (b) and (d) and which have at least one isocyanate group or at least one group which is reactive towards isocyanate groups and additionally at least one hydrophilic group or a group which can be converted into a hydrophilic group. In the text which follows, the expression "hydrophilic groups or potentially hydrophilic groups" is abbreviated to "(potentially) hydrophilic groups". The (potentially) hydrophilic groups react with isocyanates significantly more slowly than the functional groups of the monomers which serve to build up the polymer main chain. The amount of the components with (potentially) hydrophilic groups in the total amount of components (a), (b), (c), (d) and (e) is generally such that the molar amount of the (potentially) hydrophilic groups, based on the weight of all monomers (a) to (e), amounts to from 30 to 1000, preferably from 50 to 500 and especially preferably from 80 to 300 mmol/kg.

The (potentially) hydrophilic groups can be nonionic or, preferably, (potentially) ionic hydrophilic groups.

Suitable nonionic hydrophilic groups are, in particular, polyethylene glycol ethers composed of, preferably, 5 to 100, by preference 10 to 80, recurring ethylene oxide units. The content of polyethylene oxide units is, in general, from 0 to 10, preferably 0 to 6, % by weight, based on the weight of all monomers (a) to (e).

Preferred monomers having nonionic hydrophilic groups are polyethylene oxide diols, polyethylene oxide monools and the reaction products of one polyethylene glycol and one diisocyanate which include a terminally etherified polyethylene glycol moiety. Such diisocyanates and methods of preparing them are specified in the patent specifications US-A 3 905 929 and US-A 3 920 598.

Ionic hydrophilic groups are primarily anionic groups, such as the sulfonate, carboxylate and the phosphate group in the form of their alkali metal or ammonium salts, and cationic groups, such as ammonium groups, in particular protonated tertiary amino groups or quaternary ammonium groups.

Potential ionic hydrophilic groups are especially those which can be converted into the above-mentioned ionic hydrophilic groups by simple neutralization, hydrolysis or quaternization reactions, that is, for example, carboxylate groups or tertiary amino groups.

(Potentially) ionic monomers (c) are described, for example, in Ullmanns Encyklopädie der technischen Chemie (Ullmann's Encyclopedia of Industrial Chemistry), 4th edition, volume 19, pages 311-313 and described in detail for example in DE-A 1 495 745.

(Potentially) cationic monomers (c) which are of particular practical relevance are especially monomers which have tertiary amino groups, for example: tris(hydroxyalkyl)amines, N,N'-bis(hydroxyalkyl)alkylamines, N-hydroxyalkyldialkylamines, tris(aminoalkyl)amines, N,N'-bis(aminoalkyl)alkylamines, N-aminoalkyldialkylamines, where the alkyl radicals and alkanediyl units of these tertiary amines consist, independently of one another, of 1 to 6 carbon atoms. Also suitable are polyethers which include tertiary nitrogen atoms and which preferably have two terminal hydroxyl groups, as can be synthesized in a generally customary manner for example by alkoxylating amines which include two hydrogen atoms bonded to amine nitrogen, for example methylamine, aniline or N,N'-dimethylhydrazine. In general, such polyethers have a molecular weight of between 500 and 6000 g/mol.

These tertiary amines are converted into the ammonium salts either with acids, preferably strong mineral acids such as phosphoric acid, sulfuric acid, hydrohalic acids, or strong organic acids or by conversion with suitable quaternization agents such as C₁- to C₆-alkyl halides or benzyl halides, for example bromides or chlorides.

Monomers having (potentially) anionic groups which are usually suitable are aliphatic, cycloaliphatic, araliphatic or aromatic carboxylic acids and sulfonic acids which include at least one alcoholic hydroxyl group or at least one primary or secondary amino group. Preferred are dihydroxyalkylcarboxylic acids, especially those having 3 to 10 carbon atoms, as they are also described in US-A 3 412 054. Particularly oreferred are compounds of the general formula (c₁) 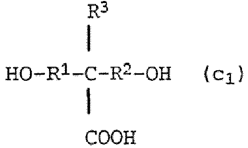 in which R¹ and R² are a C₁- to C₄-alkanediyl unit and R³ represents a C₁- to C₄-alkyl unit and in particular dimethylolpropionic acid (DMPA).

Also suitable are corresponding dihydroxysulfonic acids and dihydroxyphosphonic acids, such as 2,3-dihydroxypropanephosphonic acid.

Otherwise suitable are dihydroxyl compounds having a molecular weight of above 500 to 10000 g/mol which include at least 2 carboxylate groups, which compounds are known from DE-A 3 911 827. They are obtainable by reacting dihydroxyl compounds with tetracarboxylic dianhydrides such as pyromellitic dianhydride or cyclopentanetetracarboxylic dianhydride in a molar ratio of from 2:1 to 1.05:1 in a polyaddition reaction. Particularly suitable as dihydroxyl compounds are the monomers (b2), which are mentioned as chain extenders, and the diols (b1).

Suitable monomers (c) which have amino groups which are reactive toward isocyanates are aminocarboxylic acids such as lysine, β-alanine or the adducts of aliphatic diprimary diamines with a,β-unsaturated carboxylic acid or sulfonic acids, which adducts are mentioned in DE-A 2034479.

Such compounds are described, for example, by the formula (c₂)

H₂N-R⁴-NH-R⁵-X (c₂)

in which R⁴ and R⁵ independently of one another are a C₁- to C₆-alkanediyl unit, preferably ethylene, and X is COOH or SO₃H.

Especially preferred compounds of the formula (c₂) are N-(2-aminoethyl)-2-aminoethanecarboxylic acid and N-(2-aminoethyl)-2-aminoethanesulfonic acid or the corresponding alkali metal salts, with Na as the counterion being especially preferred.

Furthermore preferred are the adducts of the abovementioned aliphatic diprimary diamines with 2-acrylamido-2-methylpropanesulfonic acid, as they are described, for example, in DE Patent Specification 1 954 090.

Where monomers containing potentially ionic groups are employed, their conversion into the ionic form may take place before, during, but preferably after the isocyanate polyaddition, since the solubility of the ionic monomers in the reaction mixture is frequently no more than poor. The sulfonate or carboxylate groups are especially preferably present in the form of their salts with an alkali metal ion or with an ammonium ion as the counterion.

The monomers (d), which differ from the monomers (a) to (c) and which are optionally also components of the polyurethane, will generally serve for crosslinking or chain-extension purposes. In general, they are more than dihydric/nonphenolic alcohols, amines having 2 or more primary and/or secondary amino groups and compounds which, besides one or more alcoholic hydroxyl groups, include one or more primary and/or secondary amino groups.

Alcohols with a higher hydricity than 2, which may serve for establishing a specific degree of branching or crosslinking, are, for example, trimethylolpropane, glycerol or sugars.

Also suitable are monoalcohols which, besides the hydroxyl group, carry a further group reactive toward isocyanates, such as monoalcohols with one or more primary and/or secondary amino groups, e.g. monoethanolamine.

Polyamines with 2 or more primary and/or secondary amino groups are primarily used when the chain extension and/or crosslinking is to take place in the presence of water since amines generally react with isocyanates more rapidly than do alcohols or water. This is frequently the case when aqueous dispersions of crosslinked polyurethanes or polyurethanes with a high molecular weight are desired. In such cases, a procedure is followed in which prepolymers with isocyanate groups are prepared, dispersing them rapidly in water and subsequently extending the chains or crosslinking them by the addition of compounds which include a plurality of amino groups which are reactive towards isocyanates.

Amines which are suitable for this purpose are, in general, polyfunctional amines in a molecular weight range of from 32 to 500 g/mol, preferably from 60 to 300 g/mol, which comprise at least two amino groups selected from the group of the primary and secondary amino groups. Examples thereof are diamines, such as diaminoethane, diaminopropanes, diaminobutanes, diaminohexanes, piperazine, 2,5-dimethylpiperazine, amino-3-aminomethyl-3,5,5-trimethylcyclohexane (isophoronediamine, IPDA), 4,4'-diaminodicyclohexylmethane, 1,4-diaminocyclohexane, aminoethylethanolamine, hydrazine, hydrazine hydrate or triamines, such as diethylenetriamine or 1,8-diamino-4-aminomethyloctane.

The amines may also be employed in blocked form, for example in the form of the corresponding ketimines (see, for example, CA-A 1 129 128), ketazines (cf., for example, US-A 4 269 748) or amine salts (see US-A 4 292 226). Oxazolidines as are used, for example, in US-A 4 192 937, too, are capped polyamines which can be employed for synthesizing the polyurethanes according to the invention for extending the chains of the prepolymers. When using such capped polyamines, these are generally mixed with the prepolymers in the absence of water and this mixture is subsequently mixed with the dispersion water or some of the dispersion water so that the corresponding polyamines are liberated hydrolytically.

It is preferred to use mixtures of di- and triamines; it is especially preferred to use mixtures of isophorone diamine (IPDA) and diethylene triamine (DETA).

The polyurethanes preferably comprise from 1 to 30, especially preferably from 4 to 25, mol%, based on the total amount of components (b) and (d) of a polyamine which has at least 2 amino groups which are reactive towards isocyanates, as monomers (d).

Alcohols with a higher hydricity than 2, which may serve for establishing a specific degree of branching or crosslinking, are, for example, trimethylolpropane, glycerol or sugars.

For the same purpose, it is also possible to employ more than divalent isocyanates as monomers (d). Commercially available compounds are, for example, isocyanurate, or hexamethylene diisocyanate biuret.

Monomers (e), which can optionally be included, are monoisocyanates, monoalcohols and monoprimary and -secondary amines. In general, they amount to not more than 10 mol%, based on the total molar amount of the monomers. These monofunctional compounds will usually include further functional groups, such as olefinic groups or carbonyl groups, and serve to introduce functional groups into the polyurethane, which groups make possible the dispersing and/or the crosslinking or further polymer-analog reaction of the polyurethane. Suitable for this purpose are monomers such as isopropenyl-a,a-dimethylbenzyl isocyanate (TMI) and esters of acrylic or methacrylic acid, such as hydroxyethyl acrylate or hydroxyethyl methacrylate.

Coatings with a particularly good property profile are obtained in particular when the monomers (a) employed are essentially only aliphatic diisocyanates, cycloaliphatic diisocyanates or TMXDI, and the monomer (b1) employed is essentially only polyester diols, composed of the abovementioned aliphatic diols and diacids.

This monomer combination is complemented in an outstanding manner by, as component (c), diamino acid salts; very especially by N-(2-aminoethyl)-2-aminoethanesulfonic acid, N-(2-aminoethyl)-2-aminoethanecarboxylic acid and their corresponding alkali metal salts, with the Na salts being most suitable, and by a mixture of DETA/IPDA as component (d).

From the field of polyurethane chemistry, it is generally known how the molecular weight of the polyurethanes can be adjusted through the choice of fractions of the monomers which are reactive with one another, and the arithmetic mean of the number of reactive functional groups per molecule.

Normally, components (a) to (e) and their respective molar amounts are chosen such that the ratio A:B with
A) the molar amount of isocyanate groups and
B) the total of the molar amount of the hydroxyl groups and the molar amount of the functional groups which are capable of reacting with isocyanates in an addition reaction is 0.5:1 to 2:1, preferably 0.8:1 to 1.5, especially preferably 0.9:1 to 1.2:1. It is very particularly preferred that the ratio A:B is as close as possible to 1:1.

The monomers (a) to (e) employed include, on average, usually 1.5 to 2.5, preferably 1.9 to 2.1, especially preferably 2.0 isocyanate groups or functional groups which are capable of reacting with isocyanates in an addition reaction.

The polyaddition of components (a) to (e) for the preparation of the polyurethane which is present in the aqueous dispersions in accordance with the invention can be carried out at reaction temperatures of from 20 to 180°C, preferably 70 to 150°C, under atmospheric pressure or under autogenic pressure.

The reaction times required are usually in the range of from 1 to 20 hours, especially in the range from 1.5 to 10 hours. It is known in the field of polyurethane chemistry how the reaction time is influenced by a multiplicity of parameters such as temperature, monomer concentration, monomer reactivity.

The polyaddition of the monomers a), b), c) and optionally d) and e) to prepare the polyurethane dispersion is preferably carried out in the presence of a cesium salt. In this context, preferred cesium salts are compounds in which the following anions are employed: F⁻, Cl⁻, ClO⁻, ClO₃⁻, ClO₄⁻, Br⁻, I⁻, IO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO²⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ and (Cₙ₊₁H₂ₙ₋₂O₄)²⁻, where n represents the numbers 1 to 20. Especially preferred in this context are cesium carboxylates in which the anion corresponds to the formulae (CₙH₂ₙ₋₁O₂)⁻ and (Cₙ₊₁H₂ₙ₋₂O₄)²⁻ with n equaling 1 to 20. Very especially preferred cesium salts include, as anions, monocarboxylates of the general formula (CₙH₂ₙ₋₁O₂)-, where n represents the numbers 1 to 20. In this connection, formate, acetate, propionate, hexanoate and 2-ethylhexanoate in particular are to be mentioned. The cesium salts are employed in amounts of from 0.01 to 10 mmol cesium salt per kg of solvent-free reaction mixture. They are preferably used in amounts of from 0.05 to 2 mmol cesium salt per kg of solvent-free reaction mixture.

The cesium salts may be added to the reaction mixture in solid form, but preferably in dissolved form. Suitable solvents are polar, aprotic solvents or else protic solvents. Others which are especially suitable, besides water, are alcohols; very especially preferably suitable are polyols as they can also be employed as units for polyurethanes, such as, for example, ethane diols, propane diols and butane diols. The use of the cesium salts permits the polyaddition reaction to be carried out under the usual conditions.

Suitable polymerization apparatuses for carrying out the polyaddition reaction are stirred vessels, in particular when the concomitant use of solvents provides low viscosity and good removal of heat.

Preferred solvents are infinitely miscible with water, have a boiling point of from 40 to 100°C at atmospheric pressure and react only slowly with the monomers, if at all.

In most cases, the dispersions are prepared by one of the following methods:
In the "acetone process", an ionic polyurethane is prepared from components (a) to (c) in a water-miscible solvent which boils below 100°C at atmospheric pressure. Water is added in an amount sufficient to form a dispersion in which water is the continuous phase.

The "prepolymer mixing process" differs from the acetone process in that a prepolymer which includes isocyanate groups is first prepared instead of a (potentially) ionic polyurethane which has reacted completely. Here, the components are chosen such that the ratio A:B according to the definition is from greater than 1.0 up to 3, preferably 1.05 to 1.5. The prepolymer is first dispersed in water and then, optionally, crosslinked by reaction of the isocyanate groups with amines which include more than 2 amino groups which are reactive towards isocyanates, or subjected to a chain extension reaction with amines which include 2 amino groups which are reactive towards isocyanates. A chain extension then also takes place when no amine is added. In this case, isocyanate groups are hydrolyzed to give amino groups, which react with the remaining isocyanate groups of the prepolymers with chain extension.

If, in the preparation of the polyurethane, a solvent has been included, the majority of the solvent is usually removed from the dispersion, for example by distillation at reduced pressure. The dispersions preferably have a solvent content of less than 10% by weight; especially preferably, they are free from solvents.

The dispersions generally have a solids content of from 10 to 75, preferably from 20 to 65, % by weight and a viscosity of from 10 to 500 m Pas (measured at a temperature of 20°C and a shear rate of 250 s⁻¹).

Hydrophobic adjuvants which, under certain circumstances, can be distributed homogeneously in the finished dispersion with difficulty only, are, for example, phenol condensation resins obtained from aldehydes and phenol, or phenol derivatives or epoxy resins, and other polymers, for example those mentioned in DE-A 3903538, 43 09 079 and 40 24 567, which, in polyurethane dispersions, act for example as an adhesion promoter, can be added to the polyurethane or to the prepolymer even before dispersing takes place, according to the publications mentioned hereinabove.

The polyurethane dispersions may comprise, if available, adjuvants and additives such as blowing agents, antifoams, emulsifiers, thickeners and thixotropic agents and colorants such as dyes and pigments.

The dispersion is preferably largely free, in particular entirely free, from organometallic compounds such as organotin compounds.

The dispersion of a polyurethane may be present as an emulsion or suspension; preferably, the polyurethane is suspended. As a rule, the polyurethane particles have a particle size distribution with a D50 value of from 0.05 to 10 µm, preferably from 0.1 to 5 µm, it being possible to determine the D50 value by dynamic light scattering.

The aqueous pesticide-comprising dispersion may comprise any pesticide. The expression pesticides refers to at least one active substance selected from the group of the fungicides, insecticides, nematicides, herbicides, safeners and/or growth regulators. Preferred pesticides are fungicides, insecticides, herbicides and growth regulators. Especially preferred pesticides are growth regulators. It is also possible to use mixtures of pesticides from two or more of the abovementioned classes. A person skilled in the art is familiar with such pesticides, which can be found, for example, in Pesticide Manual, 16th ed. (2012), The British Crop Protection Council, London. Suitable insecticides are insecticides from the class of the carbamates, organophosphates, organochlorine insecticides, phenylpyrazoles, pyrethroids, neonicotinoids, spinosyns, avermectins, milbemycins, juvenile hormone analogs, alkyl halides, organotin compounds, nereistoxin analogs, benzoylureas, diacylhydrazines, METI acaricides, and insecticides such as chloropicrin, pymetrozine, flonicamid, clofentezine, hexythiazox, etoxazole, diafenthiuron, propargite, tetradifon, chlorfenapyr, DNOC, buprofezin, cyromazine, amitraz, hydramethylnon, acequinocyl, fluacrypyrim, rotenone, or derivatives thereof. Suitable fungicides are fungicides from the classes dinitroanilines, allylamines, anilinopyrimidines, antibiotics, aromatic hydrocarbons, benzenesulfonamides, benzimidazoles, benzisothiazoles, benzophenones, benzothiadiazoles, benzotriazines, benzylcarbamates, carbamates, carboxamides, carboxylic acid amides, chloronitriles, cyanoacetamide oximes, cyanoimidazoles, cyclopropanecarboxamides, dicarboximides, dihydrodioxazines, dinitrophenylcrotonates, dithiocarbamates, dithiolanes, ethylphosphonates, ethylaminothiazole carboxamides, guanidines, hydroxy(2-amino-)pyrimidines, hydroxyanilides, imidazoles, imidazolinones, inorganic substances, isobenzofuranones, methoxyacrylates, methoxycarbamates, morpholines, N-phenylcarbamates, oxazolidinediones, oximinoacetates, oximinoacetamides, peptidylpyrimidinnucleosides, phenylacetamides, phenylamides, phenylpyrrols, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazins, triazols. Suitable herbicides are herbicides from the classes of the acetamides, amides, aryloxyphenoxypropionates, benzamides, benzofuran, benzoic acids, benzothiadiazinones, bipyridylium, carbamates, chloroacetamides, chlorocarboxylic acids, cyclohexanediones, dinitroanilines, dinitrophenol, diphenyl ethers, glycines, imidazolinones, isoxazoles, isoxazolidinones, nitriles, N-phenylphthalimides, oxadiazoles, oxazolidinediones, oxyacetamides, phenoxycarboxylic acids, phenyl carbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl (thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, ureas. Preferred pesticides are fungicides, such as
A) strobilurins:
   Azoxystrobin, dimoxystrobin, enestroburin, fluoxastrobin, kresoximmethyl, metominostrobin, orysastrobin, picoxystrobin, pyraclostrobin, pyribencarb, trifloxystrobin, 2-(2-(6-(3-chloro-2-methylphenoxy)-5-fluoro-pyrimidin-4-yloxy)phenyl)-2-methoxyimino-N-methylacetamide, methyl 2-(ortho-((2,5-dimethylphenyloxymethylene)phenyl)-3-methoxyacrylate, methyl 3-methoxy-2-(2-(N-(4-methoxyphenyl)cyclopropane-carboximidoylsulfanylmethyl)phenyl) acrylate, 2-(2-(3-(2,6-dichlorophenyl)-1-methylallylideneaminooxymethyl)phenyl)-2-methoxyimino-N-methylacetamide; and
B) carboxanilides: benalaxyl, benalaxyl-M, benodanil, bixafen, boscalid, carboxin, fenfuram, fenhexamid, flutolanil, furametpyr, isopyrazam, isotianil, kiralaxyl, mepronil, metalaxyl, metalaxyl-M (mefenoxam), ofurace, oxadixyl, oxycarboxin, penthiopyrad, tecloftalam, thifluzamide, tiadinil, 2-amino-4-methylthiazole-5-carboxanilide, 2-chloro-N-(1,1,3-trimethylindan-4-yl)nicotinamide, N-(2',4'-difluorobiphenyl-2-yl)-3-difluoromethyl-1-methyl-1H-pyrazole-4-carboxamide, N-(2',4'-dichlorobiphenyl-2-yl)-3-difluoromethyl-1-methyl-1H-pyrazole-4-carboxamide, N-(2',5'-difluorobiphenyl-2-yl)-3-difluoromethyl-1-methyl-1H-pyrazole-4-carboxamide, N-(2',5'-dichlorobiphenyl-2-yl)-3-difluoromethyl-1-methyl-1H-pyrazole-4-carboxamide, N-(3',5'-difluorobiphenyl-2-yl)-3-difluoromethyl-1-methyl-1H-pyrazole-4-carboxamide, N-(3',5'-dichlorobiphenyl-2-yl)-3-difluoromethyl-1-methyl-1H-pyrazole-4-carboxamide, N-(3'-fluorobiphenyl-2-yl)-3-difluoromethyl-1-methyl-1H-pyrazole-4-carboxamide, N-(3'-chlorobiphenyl-2-yl)-3-difluoromethyl-1-methyl-1H-pyrazole-4-carboxamide, N-(2'-fluorobiphenyl-2-yl)-3-difluoromethyl-1-methyl-1 H-pyrazole-4-carboxamide, N-(2'-chlorobiphenyl-2-yl)-3-difluoromethyl-1-methyl-1H-pyrazole-4-carboxamide, N-(3',4',5'-trifluorobiphenyl-2-yl)-3-difluoromethyl-1-methyl-1H-pyrazole-4-carboxamide, N-(2',4',5'-trifluorobiphenyl-2-yl)-3-difluoromethyl-1-methyl-1 H-pyrazole-4-carboxamide, N-[2-(1,1,2,3,3,3-hexafluoropropoxy)phenyl]-3-difluoromethyl-1-methyl-1H-pyrazole-4-carboxamide, N-[2-(1,1,2,2-tetrafluoroethoxy)phenyl]-3-difluoromethyl-1-methyl-1H-pyrazole-4-carboxamide, N-(4'-trifluoromethylthiobiphenyl-2-yl)-3-difluoromethyl-1-methyl-1H-pyrazole-4-carboxamide, N-(2-(1,3-dimethylbutyl)phenyl)-1,3-dimethyl-5-fluoro-1H-pyrazole-4-carboxamide, N-(2-(1,3,3-trimethylbutyl)phenyl)-1,3-dimethyl-5-fluoro-1H-pyrazole-4-carboxamide, N-(4'-chloro-3',5'-difluorobiphenyl-2-yl)-3-difluoromethyl-1-methyl-1H-pyrazole-4-carboxamide, N-(4'-chloro-3',5'-difluorobiphenyl-2-yl)-3-trifluoromethyl-1-methyl-1H-pyrazole-4-carboxamide, N-(3',4'-dichloro-5'-fluorobiphenyl-2-yl)-3-trifluoromethyl-1-methyl-1H-pyrazole-4-carboxamide, N-(3',5'-difluoro-4'-methylbiphenyl-2-yl)-3-difluoromethyl-1-methyl-1H-pyrazole-4-carboxamide, N-(3',5'-difluoro-4'-methylbiphenyl-2-yl)-3-trifluoromethyl-1-methyl-1 H-pyrazole-4-carboxamide, N-(2-bicyclopropyl-2-yl-phenyl)-3-difluoromethyl-1 - methyl-1H-pyrazole-4-carboxamide, N-(cis-2-bicyclopropyl-2-yl-phenyl)-3-difluoromethyl-1-methyl-1H-pyrazole-4-carboxamide, N-(trans-2-bicyclopropyl-2-yl-phenyl)-3-difluoromethyl-1-methyl-1H-pyrazole-4-carboxamide, N-[1,2,3,4-tetrahydro-9-(1-methylethyl)-1,4-methanonaphthalen-5-yl]-3-(difluoromethyl)-1-methyl-1H-pyrazole-4-carboxamide.

The pesticide is preferably at least one fungicide, specifically from the class of strobilurins or carboxanilides. The pesticide is especially preferably pyraclostrobin, boscalid or the mixture of pyraclostrobin and boscalid. In a further preferred embodiment, the pesticide comprises boscalid. In a further preferred embodiment, the pesticide comprises boscalide and pyraclostrobin. In a further preferred embodiment, the pesticide comprises fluxapyroxad.

The amount of pesticide in the dispersion depends mainly on the type of application. As a rule, the weight ratio of pesticide to polyurethane will be in the range of from 1:100 to 1:1 and in particular in the range of from 1:85 to 1:2 and specifically in the range of from 1:65 to 1:5.

The dispersion usually has a viscosity (true viscosity measured at 25°C and a shear rate of 100 s⁻¹) in the range of from 2 to 500 mPas, preferably of from 5 to 100 mPas and in particular of from 10 to 50 mPas.

In most cases, the dispersion comprises formulation adjuvants, the selection of the adjuvants usually depending on the specific use form or the pesticide. Examples of suitable adjuvants are solvents, surface-active substances (such as surfactants, solubilizers, protective colloids, wetting agents and stickers), organic and inorganic thickeners, antifreeze agents, antifoams, optionally colorants and adhesives (for example for the treatment of seed).

Suitable surface-active substances (adjuvants, wetters, adhesives, dispersants or emulsifiers) are the alkali metal, alkaline-earth metal, ammonium salts of aromatic sulfonic acids, for example of lignin (Borresperse® types, Borregaard, Norway), phenol-, naphthalene -(Morwet® types, Akzo Nobel, USA) and dibutylnaphthalenesulfonic acid (Nekal® types, BASF, Germany) and of fatty acids, alkyl- and alkylarylsulfonates, alkyl sulfates, lauryl ether sulfates and fatty alcohol sulfates, and salts of sulfated hexa-, hepta- and octadecanols and of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl polyglycol ether, tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin sulfite waste liquors, and proteins, denatured proteins, polysaccharides (for example methylcellulose), hydrophobe-modified starches, polyvinyl alcohol (Mowiol® types, Clariant, Switzerland), polycarboxylates (Sokalan® types, BASF, Germany), polyalkoxylates, polyvinylamine (Lupamin® types, BASF, Germany), polyethyleneimine (Lupasol® types, BASF, Germany), polyvinylpyrrolidone and their copolymers.

Suitable surfactants are, in particular, anionic, cationic, nonionic and amphoteric surfactants, block polymers and polyelectrolytes. Suitable anionic surfactants are alkali metal, alkaline-earth metal or ammonium salts of sulfonates, sulfates, phosphates or carboxylates. Examples of sulfonates are alkylarylsulfonates, diphenylsulfonates, alpha-olefinsulfonates, sulfonates of fatty acids and oils, sulfonates of ethoxylated alkylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkylcarboxylates and carboxylated alcohol ethoxylates or alkylphenol ethoxylates.

Suitable nonionic surfactants are alkoxylates, N-alkylated fatty acid amides, amine oxides, esters or sugar-based surfactants. Examples of alkoxylates are compounds such as alcohols, alkylphenols, amines, amides, arylphenols, fatty acids or fatty acid esters which have been alkoxylated. Ethylene oxide and/or propylene oxide, preferably ethylene oxide, may be employed for the alkoxylation reaction. Examples of N-alkylated fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Suitable cationic surfactants are quaternary surfactants, for example quaternary ammonium compounds having one or two hydrophobic groups, or salts of long-chain primary amines. Examples of amphoteric surfactants are alkylbetaines and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid. Examples of polybases are polyvinylamines or polyethyleneamines.

The dispersion preferably comprises less than 10% by weight, especially preferably less than 7% by weight, in particular less than 5% by weight and specifically less than 2% by weight total amount of nonionic surfactants. To calculate this nonionic surfactant content, nonionic surfactants which have been added for other purposes, such as adjuvants or spreaders, are also included in the calculation.

Examples of adjuvants are organically-modified polysiloxanes, such as BreakThruS 240®; alcohol alkoxylates, such as Atplus®245, Atplus®MBA 1303, Plurafac®LF and Lutensol® ON; EO-PO block polymers, for example Pluronic® RPE 2035 and Genapol® B; alcohol ethoxylates, for example Lutensol® XP 80; and sodium dioctylsulfosuccinate, for example Leophen® RA.

Examples of thickeners (i.e. compounds which impart a modified flow behavior to the composition, i.e. high viscosity at rest and low viscosity in the agitated state) are polysaccharides such as xanthan (Kelzan®, CP Kelco Inc.; Rhodopol® 23, Rhodia), inorganic layered minerals such as magnesium aluminum silicates (Veegum® types, R.T. Vanderbilt; attapulgite from Attaclay), or organo-layered silicates, such as smectites which have been aftertreated with quaternary ammonium salts.

To improve film formation, in particular at low temperatures during application, it is possible to add film-forming adjuvants. Examples of film-forming adjuvants are volatile hydrocarbons such as petroleum fractions, white mineral oils, liquid paraffins, glycols such as butylene glycol, ethylene glycol, diethylene glycol and 1,2 propylene glycol, glycol ethers such as glycol butyl ether, diethylene glycol monobutyl ether (butyl diglycol), 1-methoxy-2-propanol, dipropylene glycol methyl ether, dipropylene glycol propyl ether, dipropylene glycol n-butyl ether, tripropylene glycol n-butyl ether, 2,3-phenoxypropanol, glycol esters and glycol ether esters such as butyl glycol acetate, diethylene glycol mono-n-butyl ether acetate, 2,2,4-trimethylpentane-1,3-diol monoisobutyrate, butyl glycol diacetate, methoxypropyl acetate. Preferred film-forming adjuvants are glycol ethers, glycol esters and glycol ether esters and 1,2-propylene glycol, in particular butyl diglycol, methoxypropyl acetate and 1,2-propylene glycol.

Examples of suitable antifreeze agents are ethylene glycol, 1,2-propylene glycol, urea and glycerol, preferably glycerol. Examples of antifoams are silicone emulsions (such as, for example, Silikon® SRE, Wacker, Germany, or Rhodorsil®, Rhodia, France), long-chain alcohols, fatty acids, salts of fatty acids, organofluorine compounds and their mixtures. Examples of adhesives are polyvinylpyrrolidone, polyvinyl acetate, polyvinyl alcohol and cellulose ethers (Tylose®, Shin-Etsu, Japan).

The aqueous, pesticide-comprising dispersion of a polyurethane can be applied to any plants or plant parts. This means that the plant which grows on the cropping area can be treated (for example by extensive spraying of a cropping area or by the targeted application to a zone on the plant, such as the grapevine), or that plant parts which have been separated from the plant may be treated. Examples of plant parts which have been separated from the plant are seeds, roots, fruits, tubers, bulbs, parts of stems, parts of branches, and rhizomes.

It is possible to treat any type of plants or plant parts which are obtained from any type of plants. Examples are cereals, beet, fruit, legumes, soya beans, oilseed rape, mustard, olives, sunflowers, coconut, cucurbits, cotton, citrus fruit, vegetable plants, maize, sugar cane, oil palm, tobacco, coffee, tea, bananas, grapevines, hops, grass, rubber plants, ornamentals, forestry plants. Plants which may be used include those which, as a result of breeding, including genetic engineering methods, are tolerant to attack by insects, viruses, bacteria or fungi, or to the application of herbicide. Preferred types of plants are woody plants, in particular fruit trees, such as plum, peach, cherry, apple, pear, mirabelles and, specifically, grapevines. It is possible to treat grapevines of any grape varieties, such as white grapevine varieties and red grapevine varieties, for example Müller-Thurgau, Bacchus, Riesling, Scheurebe, Silvaner or Dornfelder, Lemberger, Tempranillo and Trollinger as red grapevine varieties. In a further preferred embodiment, plants are oil palms.

Depending on the fungicidal active substance which is comprised in the composition, the composition can be used for protecting the woody plant from infection by the following fungal pathogens or for the treatment of an infection with these fungal pathogens and/or a disease caused thereby: Botryosphaeria species, Cylindrocarpon species, Eutypa lata, Neonectria liriodendri and Stereum hirsutum, Ascomycetes, Deuteromycetes, Basidiomycetes, Peronosporomycetes (syn. Oomycetes), and Fungi imperfecti, Ascomycetes such as Ophiostoma spp., Ceratocystis spp., Aureobasidium pullulans, Sclerophoma spp., Chaetomium spp., Humicola spp., Petriella spp., Trichurus spp.; Basidiomycetes such as Coniophora spp., Coriolus spp., Gloeophyllum spp., Lentinus spp., Pleurotus spp., Poria spp., Serpula spp. and Tyromyces spp., Deuteromycetes such as Aspergillus spp., Cladosporium spp., Penicillium spp., Trichoderma spp., Alternaria spp., Paecilomyces spp. and Zygomycetes such as Mucor spp., Glomerella cingulata, Guignardia budelli, Isariopsis clavispora Phomopsis species e.g. P. viticola, Plasmopara viticola, Pseudopezicula tracheiphilai, Erysiphe (syn. Uncinula) necator, Ascomycetes, Deuteromycetes, Basidiomycetes, Peronosporomycetes (syn. Oomycetes) and Fungi imperfecti.

In one embodiment, the present invention is particularly suitable for the protection against, and the treatment of, diseases caused by: Phaeomoniella chlamydospora, aleophilum, parasiticum, Phaeoacremonium spp. (aleophilum, inflatipes, chlamydosporum, angustius, viticola, rubrigenum, parasiticum), Formitipora mediterranea (syn. Phellinus punctatus, Phellinius igniarius Fomitiporia punctata), Eutypa lata, Eutypa armeniacae, Libertella blepharis, Stereum hirsutum, Phomopsis viticola, amygdalii, Botryosphaeria spp. (australis, dothidea, obtusa, stevensii, parva, rhodina), Cylindrocarpon spp. (destructans, optusisporum), Campylocarpon spp., Guignardia bidwellii, rubrigenum), Elsinoe ampelina, Verticilium, Armillaria mellea, Clitopilus hobsonii, Flammulina velutipes, Pleurotus pulmonarius, Inonotus hispidus, Trametes hirsuta, Trametes versicolor, Peniphora incarnate, Hirneola auriculae-judae, Diaporthe helianthi, ambigua, Pleurostomophora sp., Cadophora sp., Phialemonium sp.

In one embodiment, the dispersion according to the invention is particularly suitable for the protection against, and the control of, Elsinoe ampelina on grapevines. In a preferred embodiment, the dispersion is used for the protection of woody plants, specifically grapevines, against esca, i.e. for the protection of woody plants, specifically grapevines, against infection with the complex of pathogens which are associated with esca disease. The dispersion can also be used for the treatment of esca in woody plants, specifically grapevines, or for the treatment of woody plants which are infected with the pathogens which cause esca. As already explained above, in central Europe, this disease is frequently caused by the main pathogens Phaeomoniella chlamydospora, Phaeoacremonium spp. (aleophilum, inflatipes, chlamydosporum), and Formitipora mediterranea (syn. Phellinus punctatus, Fomitiporia punctata). In this case, the dispersion preferably comprises at least one strobilurin, in particular Pyraclostrobin, optionally in combination with at least one further fungicide, in particular boscalid.

The invention furthermore relates to the use of a pesticide for the treatment of esca in woody plants (specifically grapevines), where the pesticide comprises pyraclostrobin and boscalid. The weight ratio of Pyraclostrobin to Boscalid can vary within wide ranges, for example from 100 to 1 up to 1 to 100. It is preferably in the range of from 10 to 1 up to 1 to 15, especially preferably from 3 to 1 up to 1 to 6, and in particular from 1 to 1 up to 1 to 3. In a further preferred embodiment, Pyraclostrobin and Boscalid are present in a synergistically active weight ratio. The pesticide can be used at any ready-to-use concentrations, for example at a concentration of from 0.01 to 100 g/l pyraclostrobin and from 0.02 to 200 g/l boscalid, preferably 0.1 to 10 g/l pyraclostrobin and 0.2 to 20 g/l boscalid, especially preferably at a concentration of 0.3 to 3 g/l pyraclostrobin and 0.5 to 5 g/l boscalid. The application rate of these ready-to-use concentrations can amount to 1 to 300 l/ha, preferably 20 to 150 l/ha, especially preferably 30 to 90 l/ha.

The application of an aqueous, pesticide-comprising dispersion of a polyurethane to plants or plant parts can be effected in a customary manner and depends in the known manner on the type of the plants or plant parts to be treated or to be protected. The application can be effected by dabbing, painting, dipping, brushing on or spraying, preferably by spraying. Usually, the polyurethane is applied to the surface, whereby the pesticide and optionally the polyurethane penetrate the surface zone. The polyurethane, in turn, forms a permanently elastic continuous coating or a film on or in the surface and in this manner prevents plant pathogens from penetrating. The resulting polyurethane coating is weatherproof, frost-resistant, UV-resistant, rainfast, abrasion proof and nontoxic to the plant. Upon application, good penetration depth of the pesticide into the plant material are achieved, penetration preferably taking place in the direction of the vascular bundles. Frequently, the depth of penetration is at least 0.2 cm, in particular at least 0.5 cm and especially preferably at least 1 cm, up to 2.5 cm or 3 cm or more. Application is preferably effected at temperatures in the range of from -10°C to +50°C, particularly preferably in the range of from -5°C to +20°C and very particularly preferably in the range of from -3°C to +10°C.

The wounds to be treated or to be protected may take the form of natural injuries as they arise as the result of windbreak, frost or other atmospheric influences, or else they may in particular take the form of the wound areas caused by pruning. They may be wounds in the bark zone, but also wounds in the cross-section of the wood, i.e. wounds caused by sawing or cutting.

In accordance with a preferred embodiment, the application is effected by spraying the dispersion. The term "spraying" also comprises the nebulizing, blowing and splashing-on of the composition. The equipment used for spraying may be customary equipment such as, for example, commercially available atomizers, spraying apparatuses, manual sprayers, and pneumatic or manual pruning shears with spray function by means of which the dispersion can be applied in a targeted manner to pruning wounds within the scope of the usual spraying procedure. The application can be effected in a targeted manner in the wound zone, or the dispersion can be applied over a large area of the plant or parts of the plant. In accordance with an especially preferred embodiment of the invention, the application is effected by what is known as tunnel spraying, where, in plantations of fruit trees or grapevines, the woody parts after pruning treatment are sprayed in a targeted manner in the pruning zone with a dispersion, optionally after dilution, and excess spray liquor is collected. In this manner, the pruning sites and surrounding woody parts are treated.

In one embodiment, the dispersion according to the invention is used in a multi-step method. Thus, for example, it is possible to apply, to the surface to be treated or to be protected, in a first pass, a first plant protectant, in particular a fungicide, or an active ingredient preparation of this active ingredient, and the dispersion is then applied, in one of the subsequent passes, in the manner described herein.

The aqueous pesticide-comprising dispersion of a polyurethane may be diluted prior to application, for example with water, so as to obtain what is known as the tank mix. However, the dispersion may also be applied as such. Usually, the tank mix is prepared by diluting the dispersion to the 2- to 100-fold, preferably the 5- to 40-fold, and in particular the 10- to 20-fold volume. Oils of various types, and wetters, adjuvants, further pesticides may be added to the tank mix or else only immediately prior to the preparation of the tank mix from the dispersion. These agents can be admixed in the weight ratio of agent to dispersion 1:100 to 100:1, preferably 1:10 to 10:1.

The dispersion usually comprises water in a concentration of from 250 to 850 g/l, preferably 350 to 750 g/l and in particular 450 to 650 g/l.

The dispersion usually comprises polyurethane in a concentration of from 50 to 650 g/l, preferably 150 to 450 g/l and in particular 200 to 350 g/l.

The dispersion usually comprises pesticide in a concentration of from 0.01 to 300 g/l, preferably 0.5 to 100 g/l, in particular 2 to 50 g/l.

The dispersion usually comprises surface-active substances in a concentration of from 0.001 to 40 g/l, preferably 0.01 to 25 g/l, in particular 0.05 to 5 g/l.

The dispersion usually comprises thickeners in a concentration of from 0.001 to 5 g/l, preferably 0.01 to 0.5 g/l.

The dispersion usually comprises antifreeze agents in a concentration of from 0.05 to 350 g/l, preferably 0.1 to 250 g/l, in particular 0.5 to 150 g/l.

The dispersion may optionally comprise film-forming adjuvants in a concentration of from 10 to 250 g/l, preferably 50 to 150 g/l.

The dispersion may optionally comprise spreading agents in a concentration of from 0.1 to 250 g/l, preferably 1 to 150 g/l, and in particular 5 to 50 g/l. Suitable spreading agents are alkoxylated alcohols, the alcohol preferably being a linear or branched aliphatic C₆- to C₃₂- monoalcohol and the alkoxylation having been carried out with C₂- to C₆-alkylene oxide, preferably C₂-alkylene oxide.

The invention furthermore relates to the use of the dispersion according to the invention for controlling phytopathogenic fungi and/or undesired plant growth and/or undesired attack by insect or mites and/or for regulating the growth of plants, while allowing the dispersion to act on the respective pests, their environment and/or the plants to be protected from the respective pests, on plant parts, on the soil and/or on undesired plants and/or on the useful plants and/or their environment. Allowing to act is usually achieved by applying the dispersion.

The invention furthermore relates to plant parts which have been separated from a plant and to which the dispersion according to the invention has been applied. Suitable plant parts, plants and dispersions are as described above. The application can be effected as described above. Preferred plants are plant parts which have been separated from a plant and to which the dispersion according to the invention has been applied, wherein the plant part comprises the dispersion.

Advantages of the method according to the invention are that the dispersion can be applied in a simple manner, for example by spraying. The dispersion even forms a film very well at low temperatures, for example below 20°C. The dispersion is storage-stable over a prolonged period, including at elevated temperatures, and can be produced inexpensively on a large scale. A further advantage is that the dispersion is stable even at low concentrations of surface-active substances, which reduces environmental pollution as a result of the surface-active substances. The protective film which is formed after the dispersion of the polyurethane has been applied has good and durable adherence. The method is furthermore highly suitable for the protective treatment of fungal diseases on woody plants, specifically for the treatment of esca in grapevines. It is furthermore advantageous for the curative treatment of fungal diseases on woody plants. A further advantage is the low toxicity of the dispersion; the low degree of yellowing of the dispersion when applied; the high UV resistance of the dispersion; or that the dispersion can be produced largely free from organometallic compounds.

The examples and figures which follow are intended to illustrate the invention.

### Examples

| | |
|---|---|
| Surfactant A: | 33% by weight comb polymer, obtainable by polymerization of methyl methacrylate, methacrylic acid and methoxypolyethylene glycol methacrylate, HLB 11-12. |
| Surfactant B: | EO-PO-EO triblock copolymer, molecular weight approximately 6000-7000 g/mol, of which the EO (ethylene oxide) fraction amounts to 50% by weight. |
| Surfactant C: | Sodium salt of a phenolsulfonic acid/urea/formaldehyde condensate. |
| Surfactant C: | Sodium salt of a phenolsulfonic acid/urea/formaldehyde condensate. |
| Surfactant D: | Ammonium salt of polyaryl phenyl ether sulfate. |

### Example 1: Preparation of a polyurethane dispersion A

800.0 g (0.40 mol) of a polyester diol of adipic acid, neopentyl glycol and hexane-1,6-diol with an OH number of 56, 34.0 g (0.0099 mol) of a butanol-started polyethylene oxide with an OH number of 15, and 0.58 g of a solution of 1 g of cesium acetate in 9 g of butane-1,4-diol were introduced into a stirred flask and brought to 70°C. Then, 85.8 g (0.3248 mol) of HMDI and 70.8 g (0.3185 mol) of IPDI were added and the mixture was stirred at 100°C for 135 min. Thereafter, the mixture was diluted with 1160 g of acetone and cooled to 50°C, and the NCO content was determined as 0.99% by weight. 10 min after 44.6 g of a 50% strength aqueous solution of the sodium salt of 2-aminoethyl-2-aminoethanesulfonic acid had been added, the mixture was dispersed with 1200 g of water, and a chain extension was then carried out with 7.8 g of DETA and 3.6 g of IPDA in 100 g of water. After distillation of the acetone, a finely divided dispersion with a solids content of approximately 40% was obtained.

### Example 2: Preparation of a pesticide-comprising dispersion A-D

The following pesticide-comprising dispersions A-D, with a composition as shown in table 1, were prepared.

**Table 1: Compositions (all data in g/l)**

| | A | B | C | D |
|---|---|---|---|---|
| boscalid | 10 | 10 | | 10 |
| pyraclostrobin | 5 | 5 | 5 | |
| Polyurethane dispersion A | 800 | 600 | 800 | 800 |
| Surfactant A | 1.81 | 1.81 | | |
| Surfactant B | | | 0.38 | 0.6 |
| Surfactant C | | | 0.25 | 0.4 |
| Surfactant D | 0.65 | 0.65 | | |
| Xanthan thickener | 0.12 | 1.62 | 0.03 | 0.04 |
| 1,2-Propylene glycol | 100 | 100 | 100 | 100 |
| Glycerol | 4.83 | 4.83 | | |
| Water, deionized | to 1 l | to 1 l | to 1 l | to 1 l |

## Claims

1. A method of applying an aqueous, pesticide-comprising dispersion of a polyurethane which is composed of diisocyanates (a) and diols (b), to plants or plant parts, wherein the diisocyanate (a) comprises not more than 1% by weight of aromatic diisocyanate and at least 99% by weight of aliphatic diisocyanate, in each case based on the diisocyanate (a).

2. The method according to claim 1, wherein the diol (b) comprises diols (b1) and (b2), of which
b1) 10 to 100 mol%, based on the total amount of the diols (b), have a molecular weight of from 500 to 5000, and
b2) 0 to 90 mol%, based on the total amount of the diols (b), have a molecular weight of from 60 to 500 g/mol.

3. The method according to claim 1 or 2, wherein the diol (b1) is a polyester polyol, obtainable by reacting dihydric alcohols with divalent carboxylic acids.

4. The method according to any one of claims 1 to 3, wherein the diisocyanates (a) are compounds of the formula X(NCO)₂, where X is an aliphatic hydrocarbon radical having 4 to 12 carbon atoms or a cycloaliphatic hydrocarbon radical having 6 to 15 carbon atoms.

5. The method according to any one of claims 1 to 4, wherein the diisocyanate comprises 1-isocyanato-3,5,5-trimethyl-5-isocyanatomethylcyclohexane (IPDI), and/or bis(4-isocyanatocyclohexyl)methane (HMDI).

6. The method according to any one of claims 1 to 5, wherein the dispersion comprises 10 to 250 g/l of a film-forming adjuvant.

7. The method according to any one of claims 1 to 6, wherein the weight ratio of pesticide to polyurethane is in the range of from 1:100 to 1:1.

8. The method according to any one of claims 1 to 7, wherein the pesticide is a fungicide, preferably from the class of the strobilurins or carboxanilides.

9. The method according to any one of claims 1 to 8, wherein the dispersion comprises the polyurethane in a concentration of from 50 to 650 g/l.

10. The method according to any one of claims 1 to 9, wherein the dispersion comprises the pesticide in a concentration of from 0.5 to 100 g/l.

11. The method according to any one of claims 1 to 10, wherein the plants are grapevines.

12. The method according to any one of claims 1 to 11, wherein the dispersion is applied to wound areas caused by pruning.

13. An aqueous, pesticide-comprising dispersion of a polyurethane, which is composed of diisocyanates (a) and diols (b), wherein the diisocyanate (a) comprises not more than 1% by weight of aromatic diisocyanate and at least 99% by weight of aliphatic diisocyanate, in each case based on the diisocyanate (a), and wherein the diol (b) comprises diols (b1) and (b2), of which
b1) 10 to 100 mol%, based on the total amount of the diols (b), have a molecular weight of from 500 to 5000, and
b2) up to 90 mol%, based on the total amount of the diols (b), have a molecular weight of from 60 to 500 g/mol;
and wherein the ratio of the diols (b1) to the diols (b2) in mol%, based on the total amount of the diols (b), is from 0.1:1 to 5:1.

14. The use of the dispersion as defined in claims 1 to 12 for controlling phytopathogenic fungi and/or undesired plant growth and/or undesired attack by insect or mites and/or for regulating the growth of plants, by allowing the dispersion to act on the respective pests, their environment and/or the plants to be protected from the respective pest, on plant parts, on the soil and/or on undesired plants and/or on the useful plants and/or their environment.

15. Plant parts with applied dispersion which have been separated from a plant and to which the dispersion as defined in claims 1 to 12 has been applied.

## Patentansprüche

1. Verfahren zum Auftragen einer wässrigen, pestizidhaltigen Dispersion eines Polyurethans, das sich aus Diisocyanaten (a) und Diolen (b) zusammensetzt, auf Pflanzen oder Pflanzenteile, wobei das Diisocyanat (a) nicht mehr als 1 Gew.-% aromatisches Diisocyanat und mindestens 99 Gew.-% aliphatisches Diisocyanat umfasst, jeweils bezogen auf das Diisocyanat (a).

2. Verfahren nach Anspruch 1, wobei das Diol (b) die Diole (b1) und (b2) umfasst, von denen
b1) 10 bis 100 mol-%, bezogen auf die Gesamtmenge der Diole (b), ein Molekulargewicht von 500 bis 5000 aufweisen und
b2) 0 bis 90 mol-%, bezogen auf die Gesamtmenge der Diole (b), ein Molekulargewicht von 60 bis 500 g/mol aufweisen.

3. Verfahren nach Anspruch 1 oder 2, wobei es sich bei dem Diol (b1) um ein Polyesterpolyol handelt, das durch die Umsetzung von zweiwertigen Alkoholen mit zweiwertigen Carbonsäuren erhältlich ist.

4. Verfahren nach einem der Ansprüche 1 bis 3, wobei es sich bei den Diisocyanaten (a) um Verbindungen der Formel X(NCO)₂ handelt, wobei X für einen aliphatischen Kohlenwasserstoffrest mit 4 bis 12 Kohlenstoffatomen oder einen cycloaliphatischen Kohlenwasserstoffrest mit 6 bis 15 Kohlenstoffatomen steht.

5. Verfahren nach einem der Ansprüche 1 bis 4, wobei das Diisocyanat 1-Isocyanato-3,5,5-trimethyl-5-isocyanatomethylcyclohexan (IPDI) und/oder Bis(4-isocyanatocyclohexyl)methan (HMDI) umfasst.

6. Verfahren nach einem der Ansprüche 1 bis 5, wobei die Dispersion 10 bis 250 g/l eines filmbildenden Adjuvans umfasst.

7. Verfahren nach einem der Ansprüche 1 bis 6, wobei das Gewichtsverhältnis von Pestizid zu Polyurethan im Bereich von 1:100 bis 1:1 liegt.

8. Verfahren nach einem der Ansprüche 1 bis 7, wobei es sich bei dem Pestizid um ein Fungizid handelt, vorzugsweise aus der Klasse der Strobilurine oder Carboxanilide.

9. Verfahren nach einem der Ansprüche 1 bis 8, wobei die Dispersion das Polyurethan in einer Konzentration von 50 bis 650 g/l umfasst.

10. Verfahren nach einem der Ansprüche 1 bis 9, wobei die Dispersion das Pestizid in einer Konzentration von 0,5 bis 100 g/l umfasst.

11. Verfahren nach einem der Ansprüche 1 bis 10, wobei es sich bei den Pflanzen um Weintrauben handelt.

12. Verfahren nach einem der Ansprüche 1 bis 11, wobei die Dispersion auf durch Beschneiden verursachte Wundflächen aufgetragen wird.

13. Wässrige, pestizidhaltige Dispersion eines Polyurethans, das sich aus Diisocyanaten (a) und Diolen (b) zusammensetzt, wobei das Diisocyanat (a) nicht mehr als 1 Gew.-% aromatisches Diisocyanat und mindestens 99 Gew.-% aliphatisches Diisocyanat umfasst, jeweils bezogen auf Diisocyanat (a), und wobei das Diol (b) die Diole (b1) und (b2) umfasst, von denen
b1) 10 bis 100 mol-%, bezogen auf die Gesamtmenge der Diole (b), ein Molekulargewicht von 500 bis 5000 aufweisen und
b2) 0 bis 90 mol-%, bezogen auf die Gesamtmenge der Diole (b), ein Molekulargewicht von 60 bis 500 g/mol aufweisen,
und wobei das Verhältnis der Diole (b1) zu den Diolen (b2) in Molprozent, bezogen auf die Gesamtmenge der Diole (b), 0,1:1 bis 5:1 beträgt.

14. Verwendung der wie in den Ansprüchen 1 bis 12 definierten Dispersion zur Bekämpfung phytopathogener Pilze und/oder unerwünschten Pflanzenwuchses und/oder unerwünschten Insekten- oder Milbenbefalls und/oder zur Regulierung des Wachstums von Pflanzen, indem man die Dispersion auf die betreffenden Schädlinge, ihre Umgebung und/oder die vor dem betreffenden Schädling zu schützenden Pflanzen, auf Pflanzenteile, auf den Boden und/oder auf unerwünschte Pflanzen und/oder auf die Nutzpflanzen und/oder ihre Umgebung einwirken lässt.

15. Pflanzenteile mit aufgetragener Dispersion, die von einer Pflanze abgetrennt wurden und auf die die in den Ansprüchen 1 bis 12 definierte Dispersion aufgetragen wurde.

## Revendications

1. Procédé d'application d'une dispersion aqueuse comprenant un pesticide d'un polyuréthane qui est composé de diisocyanates (a) et de diols (b), à des végétaux ou à des parties de végétaux, le diisocyanate (a) ne comprenant pas plus de 1 % en poids de diisocyanate aromatique et au moins 99 % en poids de diisocyanate aliphatique, dans chaque cas sur la base du diisocyanate (a).

2. Procédé selon la revendication 1, le diol (b) comprenant des diols (b1) et (b2), parmi lesquels
b1) 10 à 100 % en moles, sur la base de la quantité totale des diols (b), possèdent un poids moléculaire allant de 500 à 5 000, et
b2) 0 à 90 % en moles, sur la base de la quantité totale des diols (b), possèdent un poids moléculaire allant de 60 à 500 g/mole.

3. Procédé selon la revendication 1 ou 2, le diol (b1) étant un polyester polyol, pouvant être obtenu par la mise en réaction d'alcools dihydriques avec des acides carboxyliques divalents.

4. Procédé selon l'une quelconque des revendications 1 à 3, les diisocyanates (a) étant des composés de formule X(NCO)₂, dans laquelle X est un radical hydrocarboné aliphatique possédant 4 à 12 atomes de carbone ou un radical hydrocarboné cycloaliphatique possédant 6 à 15 atomes de carbone.

5. Procédé selon l'une quelconque des revendications 1 à 4, le diisocyanate comprenant du 1-isocyanato-3,5,5-triméthyl-5-isocyanatométhylcyclohexane (IPDI), et/ou du bis(4-isocyanatocyclohexyl)méthane (HMDI).

6. Procédé selon l'une quelconque des revendications 1 à 5, la dispersion comprenant 10 à 250 g/l d'un adjuvant filmogène.

7. Procédé selon l'une quelconque des revendications 1 à 6, le rapport pondéral de pesticide à polyuréthane se situant dans la plage allant de 1:100 à 1:1.

8. Procédé selon l'une quelconque des revendications 1 à 7, le pesticide étant un fongicide, préférablement de la classe des strobilurines ou des carboxanilides.

9. Procédé selon l'une quelconque des revendications 1 à 8, la dispersion comprenant le polyuréthane en une concentration allant de 50 à 650 g/l.

10. Procédé selon l'une quelconque des revendications 1 à 9, la dispersion comprenant le pesticide en une concentration allant de 0,5 à 100 g/l.

11. Procédé selon l'une quelconque des revendications 1 à 10, les végétaux étant des vignes.

12. Procédé selon l'une quelconque des revendications 1 à 11, la dispersion étant appliquée à des zones de lésions causées par l'émondage.

13. Dispersion aqueuse comprenant un pesticide d'un polyuréthane, qui est composé de diisocyanates (a) et de diols (b), le diisocyanate (a) ne comprenant pas plus de 1 % en poids de diisocyanate aromatique et au moins 99 % en poids de diisocyanate aliphatique, dans chaque cas sur la base du diisocyanate (a), et le diol (b) comprenant des diols (b1) et (b2), parmi lesquels
b1) 10 à 100 % en moles, sur la base de la quantité totale des diols (b), possèdent un poids moléculaire allant de 500 à 5 000, et
b2) jusqu'à 90 % en moles, sur la base de la quantité totale des diols (b), possèdent un poids moléculaire allant de 60 à 500 g/mole ;
et le rapport des diols (b1) sur les diols (b2) en % en moles, basé sur la quantité totale des diols (b), étant de 0,1:1 à 5:1.

14. Utilisation de la dispersion telle que définie dans les revendications 1 à 12 pour la lutte contre des champignons phytopathogènes et/ou contre la croissance végétale indésirable et/ou contre l'attaque indésirable par des insectes ou des mites et/ou pour la régulation de la croissance de végétaux, en laissant agir la dispersion sur les nuisibles respectifs, sur leur environnement et/ou sur les végétaux devant être protégés du nuisible respectif, sur des parties de végétaux, sur le sol et/ou sur des végétaux indésirables et/ou sur les végétaux utiles et/ou sur leur environnement.

15. Parties de végétaux comportant la dispersion appliquée qui ont été séparées d'un végétal et auxquelles la dispersion telle que définie dans les revendications 1 à 12 a été appliquée.
